# FASCICULE DE BREVET EUROPEEN

(11) **EP 3 625 113 B1**
(45) Date de publication et mention de la délivrance du brevet: **19.01.2022**
(21) Numéro de dépôt: 18734868.5
(22) Date de dépôt: 17.05.2018
(51) Int. Cl.: B62D 25/20, B62D 43/10, B60R 5/04

(54) **BAC DE STOCKAGE POUR ASSEMBLAGE SUR UNE STRUCTURE DE CAISSE DE VÉHICULE AUTOMOBILE**
STAUBEHÄLTER ZUR MONTAGE AN EINER KRAFTFAHRZEUGKAROSSERIE
STORAGE BIN FOR ASSEMBLY ON A MOTOR VEHICLE BODY STRUCTURE

(30) Priorité: 18.05.2017 FR 1754384
(43) Date de publication de la demande: 25.03.2020
(73) Titulaire: Renault SAS, 92100 Boulogne Billancourt (FR); Nissan Motor Co., Ltd., Kanagawa 221-0023 (JP)
(72) Inventeur: JAUNASSE, Philippe, 75015 Paris (FR)
(74) Mandataire: Rougemont, Bernard
(86) Numéro de dépôt international: PCT/FR2018/051183
(87) Numéro de publication internationale: WO 2018/211219

(56) Documents cités:
- DE-A1-102009 053 979
- DE-A1-102014 018 315
- FR-A1- 3 037 917
- US-A1- 2010 225 135
- US-A1- 2011 227 367

## Description

L'invention a pour objet les structures de caisse automobile, et plus particulièrement les portions formant bac de stockage intégrées à de telles structures. Par exemple, un bac de stockage peut être intégré à l'arrière d'une structure de caisse automobile de manière à réserver un espace de stockage destiné à une roue de secours. Le bac peut être typiquement ménagé en dessous du niveau de plancher arrière de véhicule. Des bacs de stockage peuvent également être aménagés par exemple pour stocker des outils ou des accessoires de secours du véhicule. On cherche généralement à minimiser le rapport entre l'encombrement extérieur du bac -ou encombrement total du bac-, et l'encombrement du volume intérieur au bac, en optimisant la forme de ce volume en fonction des objets que le bac doit contenir. Pour stocker une roue de secours, un bac de stockage peut être typiquement réalisé en tôle emboutie métallique, l'embouti métallique étant soudé à des longerons du véhicule et à un plancher recouvrant une traverse de ripage transversale au véhicule. Les documents US 2010/225135 A1 et DE 10 2014 018315 A1 sont des exemples de bacs de stockage formés en tôle.

Afin d'alléger le véhicule, on peut souhaiter remplacer le bac métallique par un bac injecté en matière plastique. Le changement de matériau oblige à totalement repenser la conception du bac, que ce soit pour des raisons de résistance des matériaux utilisés, pour des impératifs de géométrie liés au mode de mise en forme des matériaux, ou encore en fonction des moyens d'assemblage utilisés pour installer le bac sur le véhicule, et le moment où cet assemblage a lieu. Le document US 2011/227367 A1 est un exemple de bac de stockage réalisé en matière plastique. Le document US 2011/227367 A1 divulgue le préambule de la revendication 1.

Une pièce formant bac pouvant être amenée à subir/ ou ne pas subir un historique de traitement thermique ou thermochimiques à températures élevées, en fonction du moment d'assemblage du bac sur la structure de caisse. Par exemple on peut envisager de substituer un bac en tôle métallique emboutie, par un bac réalisé en composite à matrice polymère, les composites à matrice polymère étant par exemple choisis de type SMC ("sheet molding coumpound"). De tels composites de la famille des thermodurcissables sont aptes à subir un historique de températures correspondant par exemple à un processus de cuisson de cataphorèse. En outre on cherche à minimiser le porte à faux arrière du véhicule, ce qui n'est pas optimisé avec les bacs et aménagements connus de l'état de la technique.

L'invention a pour but d'alléger encore le véhicule, de réduire les coûts de production, et de réduire le porte à faux arrière du véhicule en proposant un mode de réalisation d'un bac de roue de secours, utilisant pour former le contenant du bac, une pièce moulée par injection de matériau thermoplastique. La pièce ainsi injectée doit pouvoir être assemblée sur la structure de caisse pendant l'assemblage tôlerie donc elle doit être apte à supporter les traitements thermochimiques à température élevée appliqués à la caisse en blanc pendant le processus peinture. La pièce injectée doit également pouvoir être assemblée sur la structure de caisse après le processus peinture. Dans ce cas elle ne supportera pas de traitements thermochimiques à température élevée.

A cette fin; il est proposé un bac de stockage destiné à être assemblé à l'arrière d'un véhicule automobile, le bac comprenant une pièce moulée en matière plastique définissant, en position montée du bac :
- un rebord supérieur d'appui de bac, définissant un contour d'assemblage sensiblement plan du bac, le contour d'assemblage étant apte à être assemblé sur un cadre support entourant au moins une portion du bac,
- un fond de bac situé en contrebas par rapport au rebord supérieur d'appui,
- une ou plusieurs portion(s) de paroi latérale(s) moulée monobloc avec le fond de bac et avec le rebord supérieur d'appui, et soutenant le fond de bac par rapport au rebord supérieur d'appui.

La pièce moulée comprend en outre deux rebords obliques et est traversée, entre le rebord supérieur d'appui et le fond, par une ouverture latérale bordée par les deux rebords obliques, l'ouverture latérale formant une échancrure par le haut, l'ouverture latérale étant configurée pour être fermée par une paroi rapportée, la paroi rapportée étant alors assemblée aux deux rebords obliques.

Une telle conception de bac ouvert permet très avantageusement d'obtenir un véhicule ayant un porte à faux arrière court, en raison d'une paroi arrière rapportée verticale.

De manière préférentielle, la paroi rapportée s'étend verticalement du fond de bac jusqu'au cadre support.

Selon un mode de réalisation préféré, la paroi rapportée est sensiblement verticale.

Avantageusement, la paroi rapportée ferme le bac à l'arrière du véhicule, et est disposée perpendiculairement à la direction usuelle d'avancement du véhicule.

On limite ainsi l'encombrement du bac, notamment suivant la direction avant-arrière du véhicule.

Les rebords obliques ou verticaux s'étendent de préférence suivant une ligne moyenne autre que verticale, par exemple suivant une ligne moyenne d'assemblage oblique rectiligne, ou selon une ligne moyenne d'assemblage qui est courbe.

La ligne moyenne d'assemblage du rebord oblique ou vertical est de préférence disposée en oblique.

Avantageusement, le rebord oblique forme une surface réglée engendrée par une direction de génératrice sensiblement horizontale (i.e. inclinée d'au plus 20° par rapport à un plan horizontal). Ainsi, la zone d'assemblage de la pièce moulée et de la paroi rapportée au niveau du rebord oblique permet un bon transfert du poids de la pièce moulée et de son contenu, sur la paroi rapportée.

De manière préférentielle, l'ouverture latérale du bac est conçue pour être orientée vers l'arrière du véhicule.

La paroi rapportée peut être une doublure de jupe arrière du véhicule automobile.

Avantageusement, la paroi rapportée est assemblée à la pièce moulée le long des deux rebords obliques ou verticaux, et est également assemblée à la pièce moulée le long d'un bord libre du fond de la pièce moulée.

Par portion de paroi latérale on entend une portion de paroi contribuant, ensemble avec le fond du bac, à définir le volume intérieur utilisable du bac.

De manière préférentielle, chacun des deux rebords d'appui obliques ou verticaux rejoint le rebord supérieur d'appui du bac à une extrémité, et rejoint le fond de bac à une autre de ses extrémités.

Par portion de paroi latérale soutenant le fond du bac, on entend que la portion de paroi latérale contribue à imposer la position du fond du bac par rapport au rebord supérieur d'appui, et contribue à transférer au moins une partie de la charge appliquée au fond du bac sur le rebord supérieur d'appui.

Par contour d'assemblage sensiblement plan, on entend que l'assemblage de ce contour se fait suivant des points d'assemblage localisés dans un plan, ou, localisés dans un intervalle entre deux plans parallèles rapprochés (i.e., dont la distance entre les deux plans parallèles rapprochée représente moins du tiers de la plus faible distance entre l'un de ces plans parallèles et le fond du bac).

De manière préférentielle, le plan d'assemblage est horizontal. On peut envisager des variantes de réalisation dans lesquelles le plan d'assemblage serait incliné.

On peut envisager des variantes de réalisation dans lesquelles le rebord supérieur est assemblé suivant une succession de plans présentant un léger dénivelé entre eux.

On peut envisager des variantes de réalisation dans lesquelles le bac serait assemblé par un contour accostant sur des parois obliques, ou sur des parois verticales, d'un cadre support.

Le cadre support soutenant le rebord supérieur d'appui du bac peut être un cadre ouvert, par exemple un cadre à trois côtés. Le cadre peut être défini par une traverse du véhicule ou un plancher arrière du véhicule, et par deux longerons du véhicule. Le rebord d'appui supérieur peut être conçu pour s'appuyer sur une face supérieure de la traverse ou sur une portion de plancher arrière portée par la traverse. Le rebord d'appui supérieur peut être conçu pour s'appuyer sur une face supérieure de chacun des longerons.

Avantageusement, la paroi rapportée est assemblée au cadre support, de manière à compléter ce cadre support pour former un cadre fermé de soutien du bac.

Avantageusement, le rebord d'appui supérieur de la pièce moulée peut être sensiblement horizontal, et dans la pièce moulée peut être limitée, vers l'avant du véhicule et sous le rebord d'appui, par au moins une première portion de paroi latérale dont l'inclinaison par rapport à la verticale reste inférieure à 10°, avantageusement inférieure à 5°, de préférence inférieure à 1°.

On limite ainsi l'encombrement total du bac suivant la direction avant arrière du véhicule. Grâce à l'ouverture ménagée à l'arrière de la pièce moulée, la direction d'éjection de la pièce moulée peut être différente de la direction verticale de la pièce assemblée : la direction d'éjection de la pièce moulée peut être par exemple inclinée par rapport à la direction verticale de la pièce assemblée, de manière à augmenter l'angle de dépouille de démoulage de la portion de paroi latérale située vers l'avant du véhicule.

La pièce moulée peut comporter, sur une face extérieure d'une paroi formant le fond du bac, des reliefs longitudinaux aptes à former un carénage aérodynamique sous le véhicule.

Par reliefs longitudinaux on entend des reliefs s'étendant suivant une direction longitudinale, de manière à rigidifier la paroi de fond de bac en flexion sous l'effet de forces verticales générées par exemple par la roue de secours ou par les chargements bagages dans la coffre. La direction longitudinale est ici une direction perpendiculaire à la paroi rapportée. Elle correspond à la direction longitudinale du véhicule une fois le bac assemblé sur véhicule.

Ces reliefs peuvent par exemple, une fois le bac assemblé sur le véhicule, se trouver alignés en continuité dans le sens longitudinal, avec des reliefs d'un carénage recouvrant une portion inférieure d'une structure de caisse du véhicule.

La pièce moulée peut comporter, intégrés à une paroi formant le fond du bac, des canaux creux à section à contour fermé, de type canaux creux obtenus par injection assistée gaz ou par injection assistée eau.

Ces techniques d'injections sont connues et permettent d'évider le cœur d'une nervure "épaisse" dans un moule d'injection plastique, en chassant du polymère non encore solidifié au centre de la nervure à l'aide d'un fluide, gazeux ou liquide.

Selon un mode de réalisation, les reliefs longitudinaux extérieurs au bac peuvent être obtenus en ménageant de tels canaux creux.

Selon un autre mode de réalisation avantageux, des canaux creux peuvent être ménagés dans la paroi de fond de bac suivant le sens transversal au véhicule, c'est-à-dire suivant une direction sensiblement parallèle à la paroi rapportée fermant l'ouverture latérale du bac.

Des reliefs longitudinaux perpendiculaires aux canaux creux peuvent alors être définis par une ondulation, à épaisseur constante, d'une paroi de fond du bac, de manière à définir un profil aérodynamique de la face extérieure du bac.

De manière préférentielle, la surépaisseur par laquelle passent les canaux creux transversaux est disposée uniquement vers l'intérieur de la surface du fond du bac, de manière à ne pas modifier l'aérodynamique de la face extérieure du fond du bac.

Le bac peut comporter une paroi de fond de bac définissant des reliefs longitudinaux extérieurs sous la forme d'ondulations de la paroi de fond -formant des structures de portions de poutres longitudinales à section creuse à contour ouvert-, et comportant des canaux creux à section à contour fermé, sensiblement perpendiculaires aux reliefs longitudinaux, dont le relief par rapport à la paroi de fond de bac n'est apparent que de l'intérieur du bac.

Au niveau des portions de parois latérales, les reliefs des canaux par rapport à la paroi de fond de bac peuvent également être localisés vers l'intérieur du bac. Selon d'autres modes de réalisation, au moins une partie du relief créé par les canaux creux peut être apparent sur l'extérieur du bac au niveau des parois latérales du bac.

Au moins un canal creux peut s'étendre à la fois sur le fond de bac et sur la hauteur d'une portion de paroi latérale de la pièce moulée, de manière à former une structure de renfort apte à transférer des efforts du fond du bac vers le rebord supérieur d'appui de la pièce moulée.

Selon un mode de réalisation préféré, le canal creux s'étend, outre sur le fond, sur deux portions de parois latérales de la pièce moulée se faisant face, l'une située sur la droite, l'autre située sur la gauche du véhicule.

Deux canaux creux peuvent être disposés de manière à former deux bretelles de renfort écartées l'une de l'autre au niveau du rebord supérieur d'appui, et davantage rapprochées l'une de l'autre vers une portion centrale du fond du bac, afin de renforcer par exemple la zone de fixation de roue de secours pour un bac destiné à accueillir une roue de secours.

Avantageusement, le fond de bac peut être quadrillé par un réseau de nervures de type lamelles, comprenant un premier groupe de nervures et un deuxième groupe de nervures perpendiculaire aux premières. Par nervure de type lamelle, on entend une obtenue en entaillant la surface du moule par une entaille sensiblement plane, perpendiculairement à la surface du moule servant à injecter la pièce moulée.

Avantageusement, la hauteur des nervures est conçue de manière à ce que la hauteur des nervures compense les différences de profondeur du fond de bac liées à la présence des reliefs longitudinaux extérieurs et/ou compense les différences de profondeur liés à la présence des canaux creux sur la face intérieure du fond du bac.

Au moins un canal creux peut s'étendre entre deux zones d'appui distantes l'une de l'autre, situées sur le rebord supérieur d'appui de la pièce moulée, le canal creux parcourant en outre une portion du fond de bac, de manière à former une structure de renfort apte à transférer des efforts du fond du bac vers le rebord supérieur d'appui de la pièce moulée. Selon un mode de réalisation préféré, le canal peut s'étendre au niveau du rebord d'appui, sur une largeur suffisante du rebord d'appui, pour que le canal pour que la portion parcourue par la canal vienne en appui sur le cadre support.

Avantageusement, au niveau du rebord d'appui, le canal est sensiblement perpendiculaire à un bord libre du rebord d'appui.

De manière préférentielle, la ou les portions de parois latérales sont parcourues par au moins deux portions sensiblement verticales du canal, reliant la portion de fond du canal et des extrémités du canal intégrées au rebord d'appui, (par portion sensiblement verticale du canal, on entend qu'une ligne moyenne du canal se trouve dans un plan vertical interceptant la pièce moulée. Le canal suit alors une ligne de plus grande pente de la portion de paroi latérale.)

Selon un mode de réalisation avantageux, la face intérieure d'une paroi de fond du bac est parcourue par un quadrillage de nervures de renforcement dessinant des lames croisées.

Ce quadrillage de nervures "classiques" peut définir en pratique un nouveau plan d'appui de fond de bac, au dessus des creux liés à la présence de reliefs longitudinaux, et entre les canaux creux renforçant le bac sur sa face intérieure.

Le quadrillage de nervures, outre son rôle de renforcement mécanique, peut permettre de limiter la bruyance du bac en vibration, en empêchant ou en limitant certains des modes de vibration.

Avantageusement, le bac peut comprendre une pièce moulée dont l'ouverture latérale est bordée par une bande d'assemblage, la bande d'assemblage formant une surface réglée encaissée, de génératrices horizontales. Cette bande d'assemblage peut par exemple servir de piste de collage. Le bac peut comprendre en outre une paroi rapportée, assemblée par collage contre la pièce moulée, sous la surface réglée encaissée

Par surface réglée, on entend ici une surface réglée au sens large. Les génératrices horizontales de la surface réglée peuvent ainsi s'appuyer ici sur une courbe trapézoïdale.

Avantageusement, une portion de la bande cylindrique d'assemblage court le long de la paroi de fond de bac.

Est également proposé un procédé de fabrication d'un véhicule comprenant un bac de stockage à une extrémité avant ou arrière du véhicule, le procédé comprenant les étapes :
- fournir une structure support formant un cadre horizontal en "U" , défini par trois côté perpendiculaires formant le "U", et ouvert sur une extrémité avant ou arrière du véhicule
- fournir une paroi rapportée sensiblement verticale, avec un rebord d'appui trapézoïdal, perpendiculaire au plan général de la paroi et dessinant un contour trapézoïdal s'évasant vers le haut - le rebord d'appui trapézoïdal peut avantageusement rejoindre par en dessous, une face supérieure du cadre en "U"-,
- assembler la paroi rapportée de manière à compléter le cadre ouvert en "U" en un cadre fermé par la paroi du côté de l'extrémité du véhicule vers laquelle était ouvert le "U",
- fournir une pièce moulée formant bac, comprenant un fond de bac, comprenant un rebord d'appui supérieur apte à s'appuyer sur le cadre en "U", et comprenant un rebord d'assemblage complémentaire du rebord d'appui trapézoïdal de la paroi rapportée,
- A l'aide d'une ligne de collage courant sur le cadre en "U" et sous le rebord d'appui supérieur de la pièce, et courant sur le rebord d'appui trapézoïdal de la paroi rapportée, coller la pièce moulée sur le cadre fourni par la structure support et par la paroi rapportée.

Quelques buts, caractéristiques et avantages de l'invention apparaîtront à la lecture de la description suivante, donnée uniquement à titre d'exemple non limitatif et faite en référence aux dessins annexés, sur lesquels :
La figure 1 est une vue de principe, en coupe dans un plan médian longitudinal du véhicule, d'un bac de stockage de roue de secours selon l'invention, montrant un profil de pièce moulée définissant le volume intérieur du bac ;
La figure 2 est un exemple de profil en coupe, suivant le même plan de coupe, d'un bac de stockage de roue de secours correspondant au principe illustré en figure 1 ;
La figure 3 est un exemple de vue en perspective, vu par le dessus du bac, d'une pièce moulée constitutive du bac illustré en figure 2;
La figure 4 est une vue en perspective par le dessous, de la pièce moulée de la figure 3;
La figure 5a est une représentation schématique en perspective, du trajet d'une ligne de collage permettant d'assembler la pièce moulée des figures 3 et 4 sur une structure de caisse adaptée;
La figure 5b est une représentation schématique en perspective, d'une portion de structure de caisse automobile apte a recevoir la pièce moulée des figures 3 et 4, en assemblant cette pièce moulée suivant la ligne de collage illustrée en figure 5a.

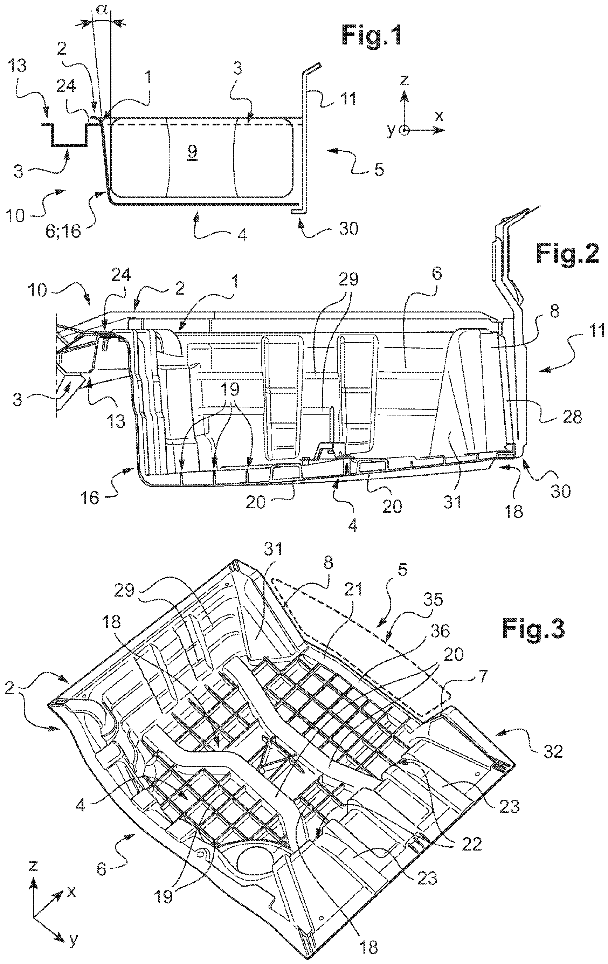

La figure 1 illustre, dans un référentiel lié à un véhicule, et repéré par des axes x, y, z, un bac 10 de roue de secours, dimensionné pour recevoir une roue de secours 9. L'espace intérieur du bac est défini par une pièce 1 moulée en matière thermoplastique. L'axe x représente un axe horizontal longitudinal du véhicule dirigé de l'avant vers l'arrière du véhicule, suivant la direction usuelle d'avancement du véhicule. L'axe y désigne un axe horizontal transversal au véhicule. L'axe z est un axe vertical dirigé vers le haut.

Comme illustré sur la figure 1, la pièce moulée 1 comprend une paroi de fond de bac 4 soutenant la roue de secours 9. La pièce moulée 1 comprend également un rebord supérieur d'appui 2 sensiblement horizontal, et venant s'appuyer sur un cadre 3 formé par une ou plusieurs traverses du véhicule, ainsi que par des longerons du véhicule.

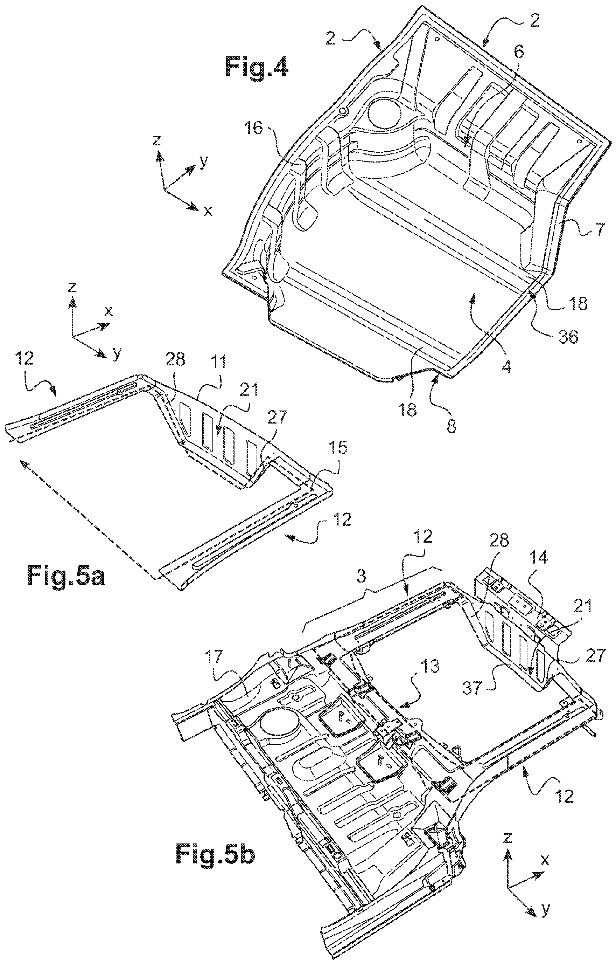

Par exemple sur la figure 1, on peut voir une traverse de ripage 13. Sur un plancher recouvrant une face supérieure de la traverse de ripage 13, s'appuie une portion 24 horizontale du rebord supérieur d'appui 2 de la pièce moulée 1, s'étendant transversalement au véhicule. La traverse de ripage 13 est reliée, à droite et à gauche du véhicule, à des longerons 12 non visibles sur les figures 1 et 2 (mais visibles par exemple sur la figure 5b).

La traverse de ripage 13, le plancher recouvrant la traverse, et les longerons 12 forment ensemble un cadre de support 3 soutenant le bac sur au moins trois côtés, au niveau de son rebord supérieur d'appui 2. Ce cadre 3 est un cadre en «U», au sens ou il comprend trois côtés. Du côté ouvert du U -i.e. vers l'arrière du véhicule, le cadre 3 est relié à une paroi rapportée 11, que l'on désigne ici par doublure de jupe arrière.

La paroi 11, sensiblement verticale, s'étend transversalement au véhicule. La paroi de fond 4 soutenant les objets à stocker, ici la roue de secours, est reliée au rebord supérieur d'appui 2 par une ou plusieurs portions de parois latérales 6, notamment par une première portion de paroi latérale 16 située à l'avant du bac. Ces portions 6 de paroi latérale de la pièce moulée 1, relient le fond de bac 4 et le rebord supérieur d'appui 2, de manière à définir des bords latéraux (en incluant le bord avant 24) de la pièce moulée 1.

A l'arrière du véhicule, la pièce moulée 1 présente une ouverture latérale 5, sous forme d'une échancrure par le haut, entaillant les portions de parois latérales 6. L'ouverture latérale 5 comportant des bords d'assemblage obliques ou verticaux 7, 8 - non visibles sur les figures 1 et 2 mais visibles par exemple sur la figure 3-. Ces bords obliques 7, 8 sont configurés pour pouvoir être assemblés à la paroi rapportée 11.

Une ligne moyenne d'assemblage sur ces bords 7, 8 se situe dans un plan vertical de manière à pouvoir venir accoster sur la paroi rapportée 11, qui comporte à cet effet des rebords obliques correspondants 27, 28 configuré pour venir se positionner respectivement sous les bords 7, 8 en soutenant ceux-ci. A cet effet, les bords 7, 8, 27, 28 s'étendent dans des plans comprenant une composante horizontale. Cette composante horizontale est sensiblement perpendiculaire au plan moyen vertical de la paroi rapportée 11.

Tel qu'illustré sur la figure 1, cette configuration avec pièce moulée ouverte vers l'arrière du véhicule, permet une bonne compacité avant arrière du bac.

Le bac 10 est bordé vers l'arrière par une paroi verticale correspondant à la paroi rapporté 11. Le bac est bordé à l'avant par le rebord supérieur d'appui 2 superposé au cadre 3, ainsi que par la première portion 16 de paroi latérale située à l'avant du bac, et dont l'encombrement est fonction de l'angle α de cette paroi 16 par rapport à la verticale z. L'angle α peut typiquement correspondre à un angle de 0,5 à 1°d'angle si la pièce 1 est démoulée suivant une direction perpendiculaire à la paroi de fond 4 du bac. On peut encore réduire l'encombrement avant arrière du bac 10 en rapprochant l'angle α de la valeur nulle, par exemple en concevant le moule pour démouler la pièce 1 suivant une direction légèrement inclinée par rapport à la normale au fond 4 de la pièce moulée.. Le moule d'injection de la pièce 1 peut être conçu à cet effet, grâce à l'ouverture 5 situé à l'arrière de la pièce moulée 1.

La figure 2 permet de distinguer quelques détails supplémentaires du profil de la pièce moulée 1. On retrouve sur la figure 2 des éléments communs à la figure 1, les mêmes éléments étant désignés par les mêmes références. On remarque notamment sur la figure 2, des éléments de rigidification de la pièce moulée 1, visible au niveau de la coupe de la paroi 4 du fond du bac.

Le fond du bac est rigidifié par la présence de nervures planes de rigidification 19, vues ici en coupe, mais qui forment un quadrillage à la surface du fond du bac, tel que visible sur la figure 3, de manière à former une structure tridimensionnelle. Cette structure tridimensionnelle évite notamment les vibrations de type "peau de tambour" au niveau du fond du bac.

Certaines des parois de la pièce moulée 1, sont également rigidifiées par des canaux creux 20, agissant mécaniquement comme des portions de poutres creuses à section fermée. Ces canaux 20 peuvent être obtenus par des méthodes d'injection assisté gaz ou par des méthodes d'injection assistée eau. Ces méthodes d'injection sont connues par ailleurs. Ici, le fond 4 de la pièce moulée, et certaines des parois latérales, sont ainsi rigidifiées par canaux creux.

Dans certains modes de réalisation, des nervures planes peuvent remonter le long d'une ou plusieurs portions de parois latérales du bac. Dans les exemples illustrés, les parois latérales sont dépourvues de telles nervures.

Dans le mode de réalisation illustré, les canaux creux 20 remontent le long des parois latérales 6 de manière à venir 'accrocher' chacune des poutres creuses 20 au rebord supérieur d'appui 2. La structure de poutre creuse bénéficie alors du support du cadre 3, qui est généralement une structure métallique soutenant le rebord supérieur d'appui 2.

En outre, comme illustré sur la figure 2, les parois latérales 6 sont rigidifiées vis-à-vis d'une flexion autour d'un axe vertical par un profil des parois formant des ondulations 29. Ces ondulations 29 dessinent ici un motif horizontal sur ces parois latérales 6.

On note également, sur la figure 2, une portion 31 sensiblement triangulaire de paroi, reliant un des rebords obliques 8 d'assemblage arrière de la pièce 1, et une portion de paroi latérales 6, et bordant un des cotés latéraux, -ici le côté droit- du bac 10. La paroi latérale 6 est ici sensiblement plane, -par opposition à une portion de paroi latérale cylindrique ou conique qui pourrait entourer la roue 9 et définir un bord oblique 8 sans qu'il y ait de transition entre portions de paroi latérale et portion de parois arrière. Ces modes de réalisation sont également envisageables dans le cadre de l'invention-.

On distingue sur les figures 2, 3, à la fois des nervures planes de rigidification 19, les canaux creux 20, les reliefs formés par ces canaux transversaux 20 remontant le long des parois latérales 6 de la pièce moulée 1, et les ondulations 29 de rigidification des parois latérales 6.

On devine également sur les figures 2,3, des ondulations du fond 4 de la pièce moulée 1, dans le sens longitudinal du véhicule, de manière à former les reliefs longitudinaux aérodynamiques 18.

Ces reliefs extérieurs aérodynamiques sont mieux visibles sur la figure 4.

Les figures 3 et 4 permettent de mieux appréhender les différents reliefs et les structures de rigidification de la paroi de fond de bac 4, ainsi que les parois latérales 6 du bac. On retrouve sur les figures 3 et 4 des éléments communs aux figures précédentes, les mêmes éléments étant désignés par les mêmes références.

Dans l'exemple illustré sur les figures 2, 3, les nervures planes 19 ont une hauteur comparable à la hauteur des reliefs longitudinaux aérodynamiques 18, mais on peut envisager des variantes de réalisations dans lesquelles les nervures planes 19 forment un réseau sensiblement plus haut/plus profond (dans le sens z vertical), que la profondeur des ondulations 18. La hauteur des nervures 19 peut varier en fonction des reliefs 4 du fond du bac. La hauteur des nervures 19 peut varier entre l'avant et l'arrière du bac.

On peut distinguer sur la figure 2, un rebord oblique 28 de la paroi rapportée 11, configuré pour soutenir le rebord oblique 8 de la pièce moulée. Grâces aux rebords obliques 7, 8, 27, 28 une partie du poids de la pièce moulée 1 et de son contenu peut être transféré à la paroi rapportée 11 par appui vertical, au lieu de l'être par cisaillement comme ce serait le cas pour un assemblage par portions de surfaces verticales.

On note également que la paroi rapportée 11 comporte un rebord d'assemblage inférieur horizontal 30, venant s'insérer sous une portion horizontale de rebord du fond 4 du bac.

Pour revenir aux figures 3, 4, on note que les canaux creux transversaux 20 contribuant à la rigidification du bac, en vue de déposer au centre du bac une pièce à transporter, sont dessinés non seulement de manière a venir accrocher les canaux creux au rebord supérieur 2 du bac, mais leur ligne moyenne est en outre dessinée de manière à rapprocher les deux canaux au niveau du fond du bac, vers le centre de la surface du fond 4 de la pièce moulée 1. Ainsi chacun des canaux passe sous la roue de secours que le fond 4 du bac doit soutenir.

Au voisinage des parois latérales 6, les canaux 20 s'écartent au contraire l'un de l'autre de manière a mieux répartir la charge de la roue sur le contour du rebord supérieur d'appui 2.

On note la forme globalement évasée vers le haut, de la pièce moulée 1, formant un bac dont un coté est ouvert par une échancrure trapézoïdale descendant jusqu'au fond 4 du bac. L'échancrure est également évasée vers le haut. L'échancrure définit une ouverture 5 entre le fond 4 du bac, et une ligne fictive 35 qui viendrait compléter en un contour fermé, un contour supérieur du bac au niveau du rebord d'appui 2.

La figure 5a illustre une trajectoire dans l'espace, d'une ligne de collage 15 permettant de venir fixer la pièce moulée 1 (non représentée sur la figure 5a) sur les longerons 12, sur la paroi rapportée 11, et sur le plancher recouvrant la traverse de ripage 13 (traverse de ripage non représentée sur la figure 5a). On retrouve sur la figure 5a quelques éléments communs aux figures précédentes, les mêmes éléments étant désignés par les mêmes références.

On note en particulier au niveau de la paroi rapportée 11, les portions de rebords obliques 27 et 28 destinées à accueillir respectivement le premier rebord oblique 7 et le deuxième rebord oblique 8 de la pièce moulée 1.

La ligne de collage 15 dessine une courbe fermée, parcourant le rebord supérieur d'appui 2 de la pièce moulée 1, parcourant le premier rebord oblique 7 et le deuxième rebord 8 de la pièce moulée 1, et parcourant une portion d'un rebord horizontal 36 de la paroi 4 de fond de bac de la pièce moulée 1, bordant la partie inférieure de l'ouverture 5 et configurée pour s'appuyer sur un bord 37 de la paroi rapportée 11.

La référence 21 sur la figure 5a désigne, sur la paroi rapportée 11, une portion de bande d'assemblage comprenant les bords d'assemblage 27, 28, 37, portion de bande d'assemblage que l'on peut qualifier de surface réglée, car cette portion de bande d'assemblage peut être parcourue par des génératrices horizontales parallèles à l'axe x. Cette surface réglée d'assemblage forme de fait une feuillure courte, au contour trapézoïdal, encaissé pour venir en appui dans un bord trapézoïdal complémentaire de la paroi rapportée 11.

Dans certains modes de réalisation une portion de rebord horizontal peut également être va être ménagé sur la paroi rapportée 11 pour venir soutenir les rebords droit et gauche du rebord supérieur d'appui 2 de la pièce moulée 1.

La figure 5b illustre la structure support sur laquelle est assemblée la pièce moulée 1 (pièce moulée 1 non représentée sur la figure 5b). On retrouve sur la figure 5b des éléments communs à certaines des figures précédentes, les mêmes éléments étant désignés par les mêmes références. La figure 5b illustre dans le même repère x, y, z lié au véhicule, les longerons latéraux 12 du véhicule, supportant chacun une portion droite et gauche du rebord supérieur d'appui 2 de la pièce moulée 1, le lieu de la traverse de ripage 13 transversal au véhicule et supportant à l'arrière du véhicule, une portion de plancher arrière 17.

L'ensemble des deux longerons 12 et de la traverse de ripage 13 forment un cadre supérieur support 3 en forme de 'U' c'est-à-dire un cadre ouvert, ledit cadre étant configuré pour venir supporter au moins une portion du rebord supérieur d'appui 2 de la pièce moulée 1.

Une doublure de jupe arrière 14 en deux parties comporte en sa partie inférieure la portion 11 de paroi rapportée configurée pour venir fermer à l'arrière le bac de roue de secours.

La pièce moulée 1 peut ainsi être assemblée aux deux longerons 12, à la traverse de ripage 13 -ou à la portion de plancher arrière 17- et à la paroi rapportée 11 de manière à être soutenue verticalement au niveau des zones d'accostage de la pièce moulée 1 sur la structure support.

A titre indicatif, l'épaisseur de la pièce moulée peut être comprise entre 1.5mm et 6mm, par exemple comprise entre 2mm et 4mm.

La section transversale d'un canal 20 (parois incluses) peut présenter des dimensions de l'ordre de 30 à 40 mm dans le plan de la paroi, par exemple 40 mm, et une hauteur de 15-30mm perpendiculairement à la paroi de fond ou la paroi latérale, par exemple une hauteur de 20 à 25 mm.

L'épaisseur de polymère au niveau des parois du canal peut être plus élevée que l'épaisseur du fond 4 ou de la paroi latérale 6, par exemple jusqu'à deux fois supérieure : l'épaisseur de la paroi de canal peut être par exemple comprise entre 4 et 6 mm.

L'invention ne se limite pas aux exemples de réalisation décrits, et peut se décliner en de nombreuses variantes. Les différentes portions 6 de parois latérales de la pièce moulée 1 peuvent décrire un bac de contour arrondi au lieu de dessiner un bac de contour sensiblement rectangulaire. Une inclinaison de ces rebords 7, 8 peut faciliter le démoulage de la pièce. La paroi de fond de bac 4 peut être renforcée uniquement par des nervures planes. La paroi de fond de bac peut, dans un autre mode de réalisation, être renforcée uniquement par des canaux creux formant poutre creuse. Les portions 6 de paroi latérales peuvent être renforcées uniquement par des ondulations, renforcées uniquement par des canaux creux, ou ne pas être renforcés et former des parois sensiblement lisses.

La pièce moulée 1 peut être assemblée selon d'autres techniques qu'un assemblage par collage. On peut par exemple envisager d'assembler le rebord supérieur 2 par soudage sur le cadre métallique 3 de pastilles métalliques intégrées au rebord supérieur d'appui 2 de la pièce moulée 1.

Selon une variante de réalisation les canaux peuvent remonter verticalement du fond sur une paroi latérale uniquement,

Selon une variante de réalisation, les canaux peuvent remonter de façon dissymétrique sur les parois latérales du bac, en fonction des contraintes d'encombrement dans le bac et à l'extérieur du bac.

Selon une variante de réalisation, les canaux peuvent être jointifs et communiquer dans une partie centrale du fond du bac par exemple.

La pièce moulée 1 selon l'invention est conçue de manière à optimiser la rigidité de la pièce par rapport au poids de matière mise en œuvre, de manière à intégrer les fonctions de carénage aérodynamique extérieur au véhicule, et de manière à limiter l'encombrement total du bac notamment suivant la direction avant arrière du véhicule.

On réduit ainsi le poids du véhicule et on optimise les coûts de production.

Le bac de stockage selon l'invention permet de réserver un espace de stockage optimisé à l'arrière d'un véhicule. Le recours à une large pièce en matière moulée thermoplastique permet d'alléger globalement le véhicule. Le dessin proposé pour la pièce permet d'obtenir un bon compromis entre rigidité de la pièce, volume intérieur du bac et encombrement extérieur du bac, tout en respectant les contraintes de fabrication et d'assemblage de la pièce moulée.

## Revendications

1. Bac de stockage (10) destiné à être assemblé à l'arrière d'un véhicule automobile, le bac (10) comprenant une pièce moulée (1) en matière polymère définissant, en position montée du bac :
- un rebord supérieur d'appui (2) de bac, définissant un contour d'assemblage sensiblement plan du bac (10), le contour d'assemblage étant apte à être assemblé sur un cadre support (3) entourant au moins une portion du bac,
- un fond de bac (4) situé en contrebas par rapport au rebord supérieur d'appui (2),
- une ou plusieurs portion(s) (6) de paroi latérale(s) moulée monobloc avec le fond de bac (4) et avec le rebord supérieur d'appui (2), et soutenant le fond de bac (4) par rapport au rebord supérieur d'appui (2),
**caractérisé en ce que** la pièce moulée (1) comprend en outre deux rebords obliques (7, 8) s'étendant entre le rebord supérieur d'appui (2) et le fond (4), et la pièce moulée est traversée par une ouverture latérale (5) formant une échancrure par le haut, l'échancrure étant bordée par les deux rebords obliques, l'ouverture latérale (5) étant configurée pour être fermée par une paroi rapportée (11) assemblée aux deux rebords obliques (7, 8), l'ouverture latérale (5) de la pièce moulée (1) étant bordée par une bande d'assemblage (7, 36, 8), formant une surface réglée encaissée, de génératrices horizontales, le bac s'appuyant en outre sur une paroi rapportée (11), assemblée par collage sur la pièce moulée (1), assemblée par collage contre la pièce moulée, sous la surface cylindrique encaissée (7, 36, 8), d'une bande d'assemblage (27, 37, 28) complémentaire définie sur la paroi rapportée (11).

2. Bac selon la revendication 1, dans lequel le rebord d'appui supérieur (2) de la pièce moulée (1) est sensiblement horizontal, et dans lequel la pièce moulée (1) est limitée, vers l'avant du véhicule et sous le rebord d'appui (2), par au moins une première portion de paroi latérale (16) dont l'inclinaison par rapport à la verticale reste inférieure à 10°.

3. Bac selon l'une quelconque des revendications précédentes, dans lequel la pièce moulée (1) comporte, sur une face extérieure d'une paroi formant le fond (4) du bac, des reliefs longitudinaux (18) aptes à former un carénage aérodynamique sous le véhicule.

4. Bac selon l'une des revendications 1 à 3, dans lequel la pièce moulée (1) comporte, intégrés à une paroi formant le fond (4) du bac, des canaux creux (20) à section à contour fermé.

5. Bac selon les revendications 3 et 4 combinées, comportant une paroi de fond de bac (4) définissant des reliefs longitudinaux extérieurs (18) sous la forme d'ondulations de la paroi de fond, et comportant des canaux creux (20) à section à contour fermé, sensiblement perpendiculaires aux reliefs longitudinaux (18), le relief de canaux creux (20) par rapport à la paroi de fond de bac n'étant apparent qu'à l'intérieur du bac.

6. Bac selon la revendication 4, dans lequel au moins un canal creux (20) s'étend à la fois sur le fond de bac (4) et sur la hauteur d'une portion (6) de paroi latérale de la pièce moulée (1), de manière à former une structure de renfort apte à transférer des efforts du fond du bac (4) vers le rebord supérieur d'appui (2) de la pièce moulée (1).

7. Bac selon l'une des revendications 4 à 6, dans lequel au moins un canal creux (20) s'étend entre deux zones d'appui, distantes l'une de l'autre, situées sur le rebord supérieur d'appui (2) de la pièce moulée, le canal creux (20) parcourant en outre une portion du fond de bac (4).

8. Bac selon la revendication 7, dans lequel deux canaux creux (20) forment deux bretelles de renfort écartées latéralement l'une de l'autre au niveau du rebord supérieur d'appui (2), et davantage rapprochées l'une de l'autre vers une portion centrale du fond du bac (4).

9. Procédé de fabrication d'un véhicule comprenant un bac de stockage à une extrémité avant ou arrière du véhicule, comprenant les étapes :
- fournir une structure support formant un cadre horizontal (3) en "U" , défini par trois côté perpendiculaires formant le "U", le cadre étant ouvert sur une extrémité avant ou arrière du véhicule
- fournir une paroi rapportée (11) sensiblement verticale, avec un rebord d'appui trapézoïdal (27, 37, 28), perpendiculaire à la paroi (11) et dessinant un contour trapézoïdal s'évasant vers le haut,
- assembler la paroi rapportée de manière à compléter le cadre ouvert en "U" en un cadre fermé par la paroi,
- fournir une pièce moulée (1) formant bac, comprenant un fond de bac (4), comprenant un rebord d'appui supérieur (2) apte à s'appuyer sur le cadre en "U", et comprenant un rebord d'assemblage (7, 36, 8) complémentaire du rebord d'appui trapézoïdal de la paroi rapportée (11),
- à l'aide d'une ligne de collage courant sur le cadre (3) en "U" et sous le rebord d'appui supérieur (2) de la pièce moulée, et courant sur le rebord d'appui trapézoïdal (27, 37, 28) de la paroi rapportée (11), coller la pièce moulée (1) sur le cadre (3) fourni par la structure support et par la paroi rapportée (11).

## Patentansprüche

1. Staubehälter (10) zur Montage am hinteren Teil eines Kraftfahrzeugs, wobei der Behälter (10) ein Formteil (1) aus Polymermaterial umfasst, das in der montierten Position des Behälters Folgendes definiert:
- einen oberen Auflagerand (2) des Behälters, der eine im Wesentlichen ebene Montagekontur des Behälters (10) definiert, wobei die Montagekontur dazu ausgelegt ist, an einem Stützrahmen (3) montiert zu sein, der zumindest einen Teil des Behälters umgibt,
- einen Behälterboden (4), der in Bezug auf den oberen Auflagerand (2) unten liegt,
- einen oder mehrere Seitenwandabschnitte (6), die einstückig mit dem Behälterboden (4) und mit dem oberen Auflagerand (2) geformt sind und den Behälterboden (4) in Bezug auf den oberen Auflagerand (2) halten,
**dadurch gekennzeichnet, dass** das Formteil (1) ferner zwei schräge Ränder (7, 8) umfasst, die sich zwischen dem oberen Auflagerand (2) und dem Boden (4) erstrecken, und dass durch das Formteil eine seitliche Öffnung (5) verläuft, die einen Ausschnitt von oben ausbildet, wobei der Ausschnitt durch die beiden schrägen Ränder begrenzt wird, wobei die seitliche Öffnung (5) so konfiguriert ist, dass sie durch eine mit den beiden schrägen Rändern (7, 8) verbundene angesetzte Wand (11) geschlossen wird, wobei die seitliche Öffnung (5) des Formteils (1) durch einen Verbindungsstreifen (7, 36, 8) begrenzt ist, der eine eingelassene Regelfläche ausbildet, wobei der Behälter ferner an einer angesetzten Wand (11) anliegt, die durch Verkleben mit dem Formteil (1) verbunden ist, das durch Verkleben gegen das Formteil unter der eingelassenen zylindrischen Fläche (7, 36, 8) mit einem an der angesetzten Wand (11) definierten komplementären Verbindungsstreifen (27, 37, 28) verbunden ist.

2. Behälter nach Anspruch 1, wobei der obere Auflagerand (2) des Formteils (1) im Wesentlichen horizontal ist und wobei das Formteil (1) in Richtung der Fahrzeugvorderseite und unter dem Auflagerand (2) durch mindestens einen ersten Seitenwandabschnitt (16) begrenzt ist, dessen Neigung relativ zur Vertikalen unter 10° bleibt.

3. Behälter nach einem der vorangehenden Ansprüche, wobei das Formteil (1) auf einer Außenseite einer den Boden (4) des Behälters ausbildenden Wand Längsreliefs (18) aufweist, die dazu ausgelegt sind, eine aerodynamische Verkleidung unter dem Fahrzeug auszubilden.

4. Behälter nach einem der Ansprüche 1 bis 3, wobei das Formteil (1) Hohlkanäle (20) mit geschlossener Kontur aufweist, die in eine den Boden (4) des Behälters ausbildende Wand integriert sind.

5. Behälter nach Anspruch 3 und 4 in Kombination, mit einer Behälterbodenwand (4), die äußere Längsreliefs (18) in Form von Wellen der Bodenwand definiert, und mit Hohlkanälen (20) mit einem Querschnitt mit geschlossener Kontur, die im Wesentlichen senkrecht zu den Längsreliefs (18) verlaufen, wobei das Relief der Hohlkanäle (20) in Bezug auf die Wand des Behälterboden nur im Inneren des Behälters sichtbar ist.

6. Behälter nach Anspruch 4, wobei sich mindestens ein Hohlkanal (20) sowohl über den Behälterboden (4) als auch über die Höhe eines Seitenwandabschnitts (6) des Formteils (1) erstreckt, um eine Verstärkungsstruktur auszubilden, die dazu ausgelegt ist, Kräfte vom Behälterboden (4) in Richtung des oberen Auflagerands (2) des Formteils (1) zu leiten.

7. Behälter nach einem der Ansprüche 4 bis 6, wobei sich mindestens ein Hohlkanal (20) zwischen zwei voneinander beabstandeten Auflagebereichen, die sich am oberen Auflagerand (2) des Formteils befinden, erstreckt, wobei der Hohlkanal (20) ferner durch einen Abschnitt des Behälterbodens (4) verläuft.

8. Behälter nach Anspruch 7, wobei zwei Hohlkanäle (20) zwei Verstärkungsträger ausbilden, die am oberen Auflagerand (2) seitlich voneinander beabstandet sind und in Richtung eines mittleren Abschnitts des Behälterbodens (4) weiter aneinander angenähert sind.

9. Verfahren zur Herstellung eines Fahrzeugs mit einem Staubehälter an einem vorderen oder hinteren Fahrzeugende, umfassend die folgenden Schritte:
- Bereitstellen einer Stützstruktur, die einen "U"-förmigen horizontalen Rahmen (3) ausbildet, der durch drei senkrechte Seiten definiert ist, die das "U" ausbilden, wobei der Rahmen zu einem vorderen oder hinteren Fahrzeugende hin offen ist;
- Bereitstellen einer im Wesentlichen vertikalen angesetzten Wand (11) mit einem zur Wand (11) senkrechten trapezförmigen Auflagerand (27, 37, 28), der eine sich nach oben erweiternde trapezförmige Kontur zeichnet,
- Montieren der angesetzten Wand, um den offenen "U"-förmigen Rahmen zu einem durch die Wand geschlossenen Rahmen zu vervollständigen,
- Bereitstellen eines Formteils (1), das einen Behälter ausbildet, mit einem Behälterboden (4), der einen oberen Auflagerand (2) umfasst, der dazu ausgelegt ist, auf dem "U"-förmigen Rahmen aufzuliegen, und mit einem zum trapezförmigen Auflagerand der angesetzten Wand (11) komplementären Verbindungsrand (7, 36, 8),
- mit Hilfe einer Klebelinie, die am "U"-förmigen Rahmen (3) und unter dem oberen Auflagerand (2) des Formteils verläuft und über den trapezförmigen Auflagerand (27, 37, 28) der angesetzten Wand (11) verläuft, Verkleben des Formteils (1) mit dem durch die Stützstruktur und die angesetzte Wand (11) bereitgestellten Rahmen (3).

## Claims

1. Storage bin (10) intended to be assembled at the rear of a motor vehicle, the bin (10) comprising a moulded part (1) made from polymer material defining, in the mounted position of the bin:
- an upper bin-supporting rim (2) defining a substantially planar assembly contour of the bin (10), the assembly contour being capable of being assembled on a support frame (3) surrounding at least one portion of the bin,
- a bin bottom (4) located below the upper supporting rim (2),
- one or more side wall portion(s) (6) moulded in one piece with the bin bottom (4) and the upper supporting rim (2), and supporting the bin bottom (4) relative to the upper supporting rim (2),
**characterized in that** the moulded part (1) also comprises two oblique rims (7, 8) extending between the upper supporting rim (2) and the bottom (4), and the moulded part is traversed by a lateral opening (5) forming a cut-out from above, the cut-out being bordered by the two oblique rims, the lateral opening (5) being configured to be closed by a wall insert (11) assembled on the two oblique rims (7, 8), the lateral opening (5) of the moulded part (1) being bordered by an assembly strip (7, 36, 8), forming an enclosed ruled surface, with horizontal generatrices, the bin also resting on a wall insert (11), assembled by gluing to the moulded part (1), assembled by gluing to the moulded part, under the enclosed cylindrical surface (7, 36, 8), of a complementary assembly strip (27, 37, 28) defined on the wall insert (11).

2. Bin according to Claim 1, in which the upper supporting rim (2) of the moulded part (1) is substantially horizontal, and in which the moulded part (1) is limited, towards the front of the vehicle and under the supporting rim (2), by at least one first side wall portion (16) the inclination of which relative to the vertical remains below 10°.

3. Bin according to either one of the previous claims, in which the moulded part (1) includes, on an outer face of a wall forming the bottom (4) of the bin, longitudinal ridges (18) capable of forming an aerodynamic fairing under the vehicle.

4. Bin according to one of Claims 1 to 3, in which the moulded part (1) includes, incorporated into a wall forming the bottom (4) of the bin, closed-section hollow channels (20).

5. Bin according to Claims 3 and 4 taken in combination, including a bin bottom wall (4) defining outer longitudinal ridges (18) in the form of undulations of the bottom wall, and including closed-section hollow channels (20), substantially perpendicular to the longitudinal ridges (18), the protrusion of the hollow channels (20) relative to the bin bottom wall only being apparent on the inside of the bin.

6. Bin according to Claim 4, in which at least one hollow channel (20) extends both on the bin bottom (4) and over the height of a side wall portion (6) of the moulded part (1), so as to form a reinforcing structure capable of transferring forces from the bottom of the bin (4) to the upper supporting rim (2) of the moulded part (1).

7. Bin according to one of Claims 4 to 6, in which at least one hollow channel (20) extends between two mutually distant supporting zones located on the upper supporting rim (2) of the moulded part, the hollow channel (20) also running along a portion of the bin bottom (4).

8. Bin according to Claim 7, in which two hollow channels (20) form two reinforcing braces laterally separated from each other on the upper supporting rim (2), and closer to each other towards a central portion of the bottom of the bin (4).

9. Method for manufacturing a vehicle comprising a storage bin at a front or rear end of the vehicle, comprising the steps of:
- providing a support structure forming a U-shaped horizontal frame (3), defined by three perpendicular sides forming the U, the frame being open on a front or rear end of the vehicle,
- providing a substantially vertical wall insert (11), with a trapezoidal supporting rim (27, 37, 28), perpendicular to the wall (11) and forming a trapezoidal contour that is flared towards the top,
- assembling the wall insert so as to complete the open U-shaped frame to form a frame closed by the wall,
- providing a moulded part (1) forming a bin, comprising a bin bottom (4), comprising an upper supporting rim (2) capable of resting on the U-shaped frame, and comprising an assembly rim (7, 36, 8) complementary to the trapezoidal supporting rim of the wall insert (11),
- using a gluing line running along the U-shaped frame (3) and under the upper supporting rim (2) of the moulded part, and running along the trapezoidal supporting rim (27, 37, 28) of the wall insert (11), gluing the moulded part (1) to the frame (3) provided by the support structure and by the wall insert (11).
